# EUROPEAN PATENT SPECIFICATION

(11) **EP 2 546 133 B1**
(45) Date of publication and mention of the grant of the patent: **05.09.2018**
(21) Application number: 12174759.6
(22) Date of filing: 03.07.2012
(51) Int. Cl.: B62K 19/46

(54) **Two-wheeled motor vehicle**
Zweirädriges Motorfahrzeug
Véhicule à moteur à deux roues

(30) Priority: 11.07.2011 JP 2011152889
(43) Date of publication of application: 16.01.2013
(73) Proprietor: Yamaha Hatsudoki Kabushiki Kaisha, Iwata-shi, Shizuoka 438-8501 (JP)
(72) Inventor: Kodama, Ayumu, Iwata-shi, Shizuoka 438-8501 (JP)
(74) Representative: Grünecker Patent- und Rechtsanwälte PartG mbB

(56) References cited:
- EP-A1- 0 751 063
- DE-A1- 10 312 476
- JP-A- H10 167 144
- JP-A- 2004 099 007
- JP-A- 2008 155 905

## Description

The present invention relates to a two-wheeled motor vehicle, and in particular to a structure of a storage box placed below the seat and that of a cover placed beside the storage box.

Japanese Patent Laid-open Publication No. 2008-155905 describes a two-wheeled motor vehicle having a storage box placed below a seat that is mounted so as to be opened and closed. A flange spreading outward is formed on the upper edge of the storage box. The lateral part of the seat is bent downward so as to go farther away from the lateral surface of the storage box as it goes downward.

A further example of a system according to the prior art can be found in JP 2008 155905 A which discloses a two-wheeled motor vehicle according to the preamble of claim 1.

According to the related art, it is necessary to ensure some space between the outer edge of the flange spreading outward and the inner surface of the seat. Therefore, when the lateral wall of the storage box is formed at a position more outward in order to ensure an increased capacity of the storage box, widening the seat width is inevitable.

Meanwhile, in a structure without a flange formed on the upper edge of the storage box, a member, such as an engine or the like, placed below the storage box may likely be seen through the space between the storage box and the cover placed beside the storage box, and foreign matters and a hand may be allowed to be introduced through the space.

The present invention has been conceived in view of the above described situation, and a main object thereof is to provide a two-wheeled motor vehicle capable of ensuring an increased capacity of the storage box, while reducing increase of the seat width, and moreover, to have a member placed below be hardly seen through the space between the storage box and the cover, and preventing introduction of foreign matters and a hand through the space.

In order to achieve the above described object, according to one aspect of the present invention, there is provided a two-wheeled motor vehicle according to claim 1. Said two-wheeled motor vehicle comprises a vehicle body frame, a storage box supported by the vehicle body frame, a seat placed above the storage box, being capable of opening and closing an opening defined by an upper edge of the storage box, and a cover placed beside the storage box. A lateral part of a bottom surface of the seat is bent downward and opposed to a lateral surface of the storage box so as to go farther away from the lateral surface of the storage box as it goes downward. An upper edge of the cover is positioned, in a side view, higher than a lower edge of a lateral part of the seat lower than the upper edge of the storage box. The lateral surface of the storage box has a projection formed thereon at a position lower than the upper edge thereof, the projection overlapping the upper edge of the cover in a plan view.

According to the present invention, no flange that spreads outward is formed on the upper edge of the storage box, and instead, a projection is formed at a position lower than the upper edge of the storage box, the position having a relatively large space with respect to the seat. This allows the lateral wall of the storage box be positioned close to the seat. Therefore, it is possible to increase the capacity of the storage box while reducing increase of the seat width. Further, the projection formed can make a member below be hardly seen from the space between the storage box and the cover, and introduction of foreign matters and a hand through the space can be prevented.
Fig. 1 is a side view of a two-wheeled motor vehicle according to one embodiment of the present invention;
Fig. 2 is a side view showing major elements of the two-wheeled motor vehicle with the seat closed;
Fig. 3A is a side view showing major elements of the two-wheeled motor vehicle with the seat opened;
Fig. 3B is a plan view showing major elements of the two-wheeled motor vehicle with the seat opened;
Fig. 4A is a side view of a storage box;
Fig. 4B is a plan view of the storage box;
Fig. 5A is a side view of a cover;
Fig. 5B is a front view of the cover;
Fig. 6 is a cross sectional view of the storage box and the cover according to an example not forming part of the present invention;
Fig. 7 is a plan view showing major elements of the two-wheeled motor vehicle with the seat opened;
Fig. 8 is a plan view of the storage box; and
Fig. 9 is a cross sectional view of the storage box and the cover.

An embodiment of a two-wheeled motor vehicle according to the present invention will be described with reference to the accompanying drawings.

### [First Embodiment]

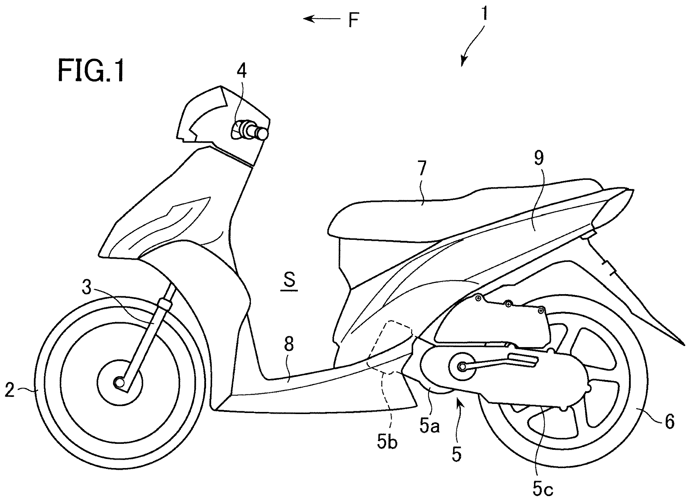

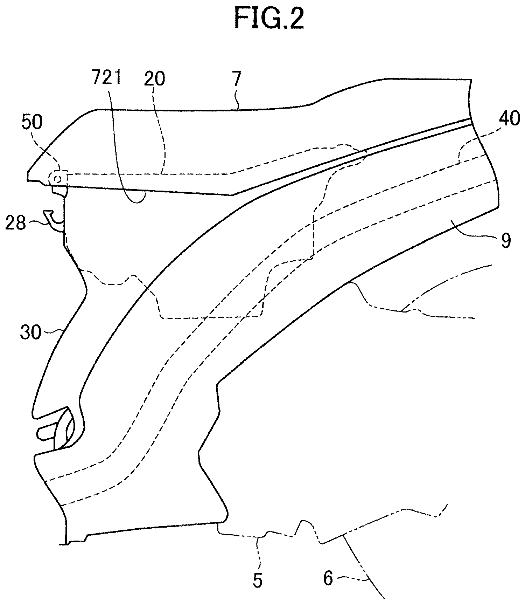

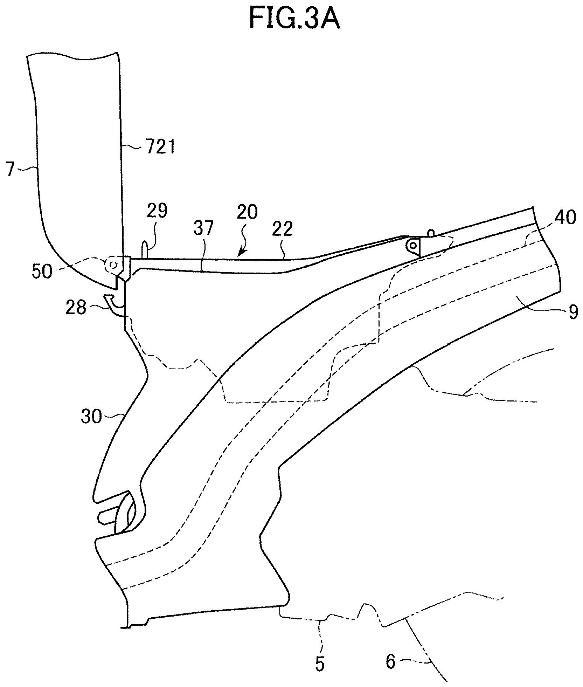

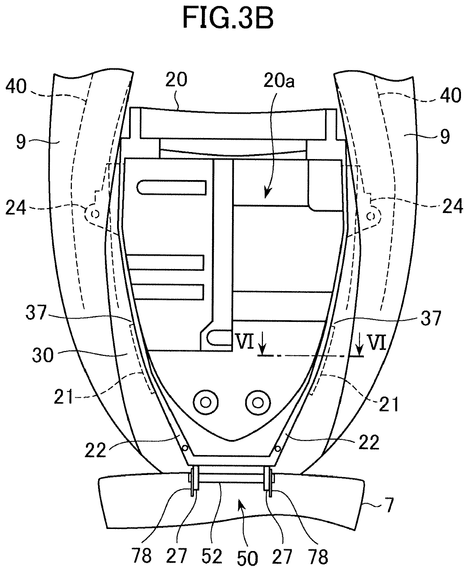

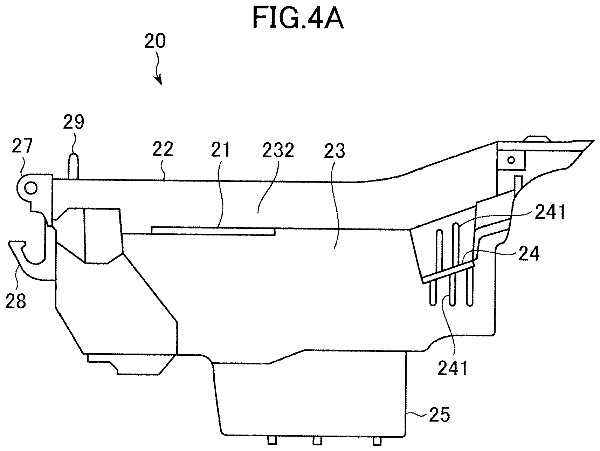

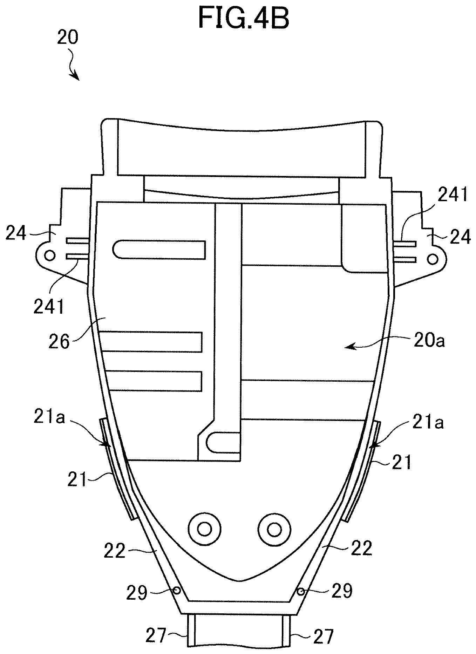

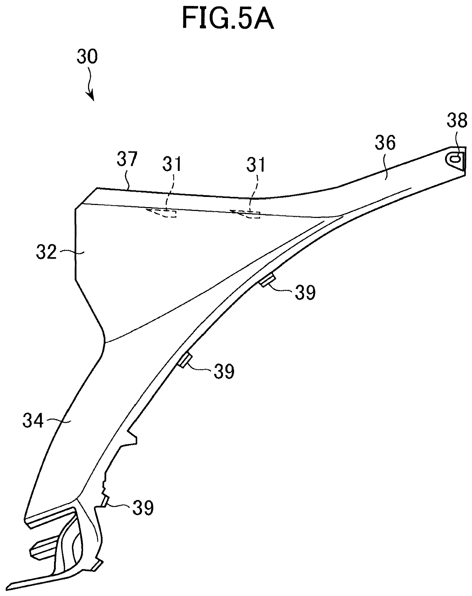

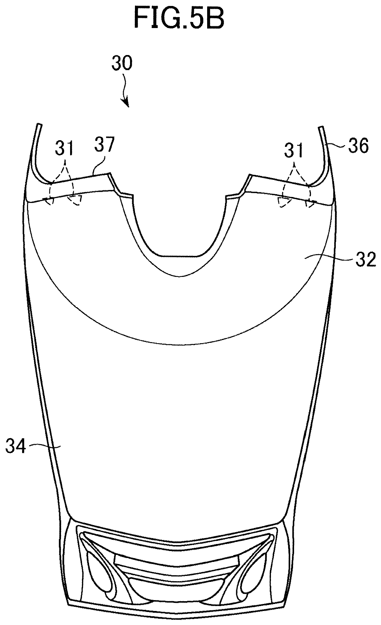

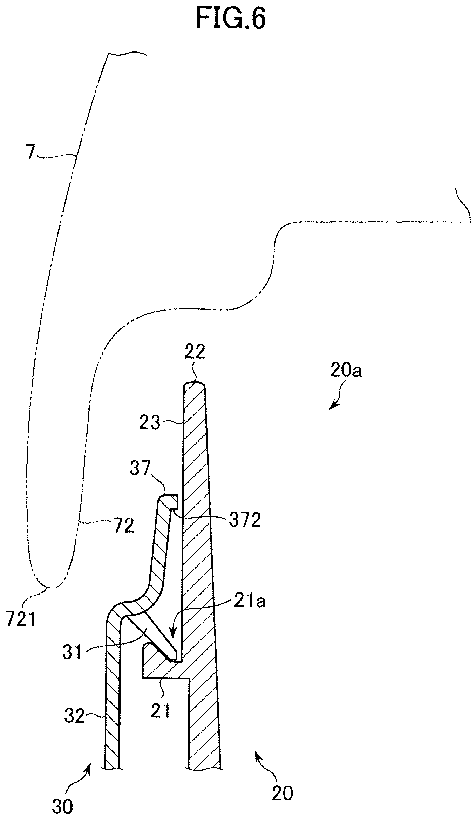

Fig. 1 is a side view of a two-wheeled motor vehicle 1. Fig. 2 is a side view showing major elements of the two-wheeled motor vehicle 1 with the seat 7 closed. Figs. 3A and 3B are a side view and a plan view showing major elements of the two-wheeled motor vehicle 1 with the seat 7 opened. Figs. 4A and 4B are a side view and a plan view of a storage box 20. Figs. 5A and 5B are a side view and a front view of a cover 30. Fig. 6 is a cross sectional view of the storage box 20 and the cover 30.

In the description below, the directions forward (in front of, and so forth), rearward (behind, at the back, and so forth), upward (higher, above, and so forth), downward (lower, below, and so forth), leftward, and rightward respectively refer to the directions forward (in front of, and so forth), rearward (behind, at the back, and so forth), upward (higher, above, and so forth), downward (lower, below, and so forth), leftward, and rightward viewed from a driver striding on the seat 7 with his/her face toward the handle 4. The arrow F in Fig. 1 indicates the forward direction.

As shown in Fig. 1, the front wheel 2 of the two-wheeled motor vehicle 1 is supported by the lower end of the front fork 3. The front fork 3 is supported so as to swing left and right by a steering shaft (not shown) supported at the foremost part of the vehicle body frame. A handle 4 is connected to the upper part of the front fork 3.

The two-wheeled motor vehicle 1 has an engine unit 5 mounted on a rear part thereof. The engine unit 5 includes a crankcase 5a, a cylinder 5b, and a transmission case 5c. The transmission case 5c stores a transmission mechanism for transmitting rotation of the crank shaft provided to the crankcase 5a via a belt, a chain, or the like to the rear wheel 6. The engine unit 5 can swing up and down relative to the vehicle body frame together with the rear wheel 6.

A seat 7 is placed above the engine unit 5. There is a space S between the front wheel 2 and the seat 7. A step board 8 is provided under the space S for a rider to put his/her foot on.

As shown in Figs. 2 to 3B, a storage box 20 is placed above the engine unit 5 under the seat 7, and a cover 30 is placed on the outer lateral side of the storage box 20. The storage box 20 is placed between a pair of left and right main frames 40 extending up-rearward of the vehicle body frame, and supported by these main frames 40. Specifically, brackets 24 formed on a rear part of the storage box 20 are attached to brackets (not shown) formed on the main frames 40. Side covers 9 are placed on the outer lateral side of the main frames 40 respectively.

The seat 7 can swing by means of a hinge mechanism 50 provided to the front end of the seat 7 and the front end of the storage box 20. Specifically, the seat 7 swings such that the rear part thereof moves up and down to thereby open and close the opening defined by the upper edge 22 of the storage box 20. Fig. 2 shows the seat 7 closing the opening of the storage box 20. Figs. 3A and 3B show the seat 7 positioned such that the opening of the storage box 20 is left open. The hinge mechanism 50 comprises a shaft 52, a pair of hinges 78 provided to the seat 7 so as to rotate relative to the shaft 52, and a pair of hinges 27 provided to the storage box 20 so as to rotate relative to the shaft 52.

As shown in Figs. 4A and Fig. 4B, the storage box 20 has a substantially box-like shape that becomes narrower as it goes forward, and has a storage space 20a open upward. The storage box 20 has a battery case 25 projecting downward for storing a battery (not shown). The storage space 20a of the storage box 20 and the storage space of the battery case 25 are separated by a roof 26.

The brackets 24 that spread outer-sideward are formed on a rear part of the outer lateral surface 23 of the storage box 20, and a plurality of ribs 241 are formed above and below the brackets 24, extending in the up-down direction. Hinges 27, being a part of the hinge mechanism 50, are formed to the front end of the storage box 20, and a hook 28 is formed below the hinges 27. Projections 29 projecting upward are formed behind the hinges 27 to abut on the bottom surface of the seat 7 when the seat 7 is closed.

Another projection 21 is formed on the outer lateral surface 23 of the storage box 20 at a position lower than the upper edge 22, extending substantially parallel to the upper edge 22. The projection 21 is crooked upward to thereby define a groove 21a between itself and the outer lateral surface 23. Note that a flange spreading outer-sideward is not formed on the upper edge 22 of the storage box 20. That is, the upper part 232 of the outer lateral surface 23 of the storage box 20 above the projection 21 is formed as a flat surface up to the upper edge 22. In other words, the thickness of the part of the lateral wall of the storage box 20 above the projection 21 is substantially uniform. As no flange is formed, the projection 21 can be seen in a plan view of the storage box 20 (see Fig. 4B).

As shown in Figs. 5A and 5B, the cover 30 includes an upper part 32 covering the front and lateral of the storage box 20, a lower part 34 extending downward from the upper part 32 and covering the front of the engine unit 5, and a pair of rear parts 36 extending up-rearward from the upper part 32. On the inner lateral surface of the upper part 32, a plurality of engaging parts 31 are formed at positions lower than the upper edge 37, projecting inner-sideward and downward. These engaging parts 31 are engaged with the projections 21 formed on the storage box 20. Further, an engaging part 39 for engagement with the side cover 9 is formed on the edge of the lower part 34, and an engaging part 38 for engagement with the storage box 20 is formed on an end part of the rear part 36. Note that a cover 30 having a part to be placed at least beside the storage box 20 is usable, and the shape shown in Figs. 5A and 5B is not limiting. For example, a plurality of covers may be separately placed to the left and right, respectively, of the storage box 20.

As shown in Fig. 6, the lateral part 72 of the bottom surface of the seat 7 is bent downward so as to be opposed to the outer lateral surface 23 of the storage box 20. The lateral part 72 of the bottom surface of the seat 7 extends diagonally so as to go farther away from the lateral surface 23 of the storage box 20 as it goes downward. The projection 21 formed on the outer lateral surface 23 of the storage box 20 is positioned lower than the upper edge 22 of the storage box 20. When the projection 21 is positioned as such, it is possible to have the outer lateral surface 23 of the storage box 20 positioned close to the lateral part 72 of the bottom surface of the seat 7. This can increase the capacity of the storage box 20 while reducing increase of the width of the seat 7. Note that although the projection 21 is positioned lower than the lower edge 721 of the lateral part of the seat 7 in this embodiment, this is not limiting, and the projection 21 may be positioned higher than the lower edge 721.

With the opening of the storage box 20 closed by the seat 7, the upper edge 37 of the cover 30 is positioned, in the side view, higher than the lower edge 721 of the lateral part of the seat 7 but lower than the upper edge 22 of the storage box 20. Therefore, with the seat 7 closed, the storage box 20 can be hardly seen in the side view (see Fig. 2).

The projection 21 positioned lower than the upper edge 22 overlaps the upper edge 37 of the cover 30 in a plan view. Therefore, it is possible to have the engine unit 5 or the like placed below be hardly seen through the space between the outer lateral surface 23 of the storage box 20 and the upper edge 37 of the cover 30 and to prevent introduction of foreign matters and a hand through the space (see Fig. 3B).

In this embodiment, the seat 7 that swings up and down to thereby open and close the opening of the storage box 20 is provided, and the lateral part 72 of the bottom surface of the seat 7 is bent downward and opposed to the lateral surface 23 of the storage box 20 so as to go farther away from the lateral surface 23 as it goes downward. That is, the interval between the lateral part 72 of the bottom surface of the seat 7 and the lateral surface 23 of the storage box 20 becomes wider as it goes downward. In this embodiment, in order to utilize the widening interval, the projection 21 is formed at a position lower than the upper edge 22, rather than providing a flange on the upper edge 22 of the storage box 20. With the above, it is possible to obtain both effects of increasing the capacity of the storage box 20 and of having a member placed below be hardly seen and preventing introduction of foreign matters and a hand through the space between the storage box 20 and the cover 30.

Further, the engaging part 31 formed on the inner lateral surface of the cover 30 is inserted into the groove 21a defined between the outer lateral surface 23 of the storage box 20 and the projection 21, and engaged with the projection 21. Therefore, it is possible to reduce the space between the outer lateral surface 23 of the storage box 20 and the upper edge 37 of the cover 30 (see Fig. 6).

Further, below the upper edge 37 of the cover 30, the projection 21 extends along the upper edge 37 of the cover 30. Therefore, it is possible to reduce the space between the outer lateral surface 23 of the storage box 20 and the upper edge 37 of the cover 30 over a wide range (see Fig. 3B).

Further, when the seat 7 is so positioned that the opening of the storage box 20 is left open, the upper edge 37 of the cover 30 can be seen in a plan view. Therefore, it is possible to have the engine unit 5 and the like placed below be hardly seen through the space between the outer lateral surface 23 of the storage box 20 and the upper edge 37 of the cover 30 (see Fig. 3B).

Further, the upper edge 37 of the cover 30 has an inner flange 372 projecting toward the outer lateral surface 23 of the storage box 20. This enables further reduction of the space between the outer lateral surface 23 of the storage box 20 and the upper edge 37 of the cover 30 (see Fig. 6) . Note that, however, the inner flange 372 is not mandatory.

Further, the pair of hinges 78 formed on the seat 7 are positioned more outer-sideward than the pair of hinges 27 formed on the storage box 20. With the above, when a force in the left-right direction is applied to the seat 7, the force being transmitted via the hinges 78, 27 to the storage box 20 can be reduced, and thus deformation of the storage box 20 can be reduced (see Fig. 3B) .

### [Second Embodiment]

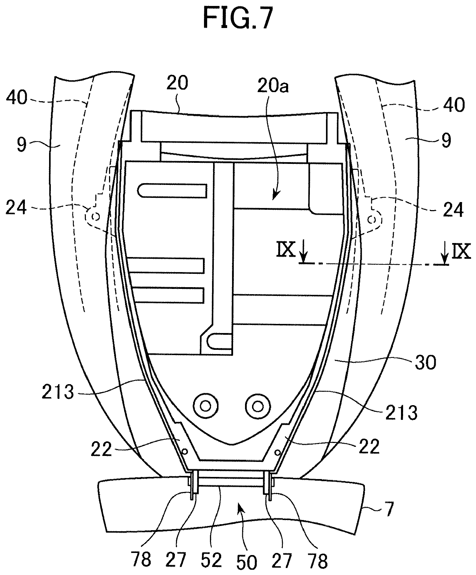

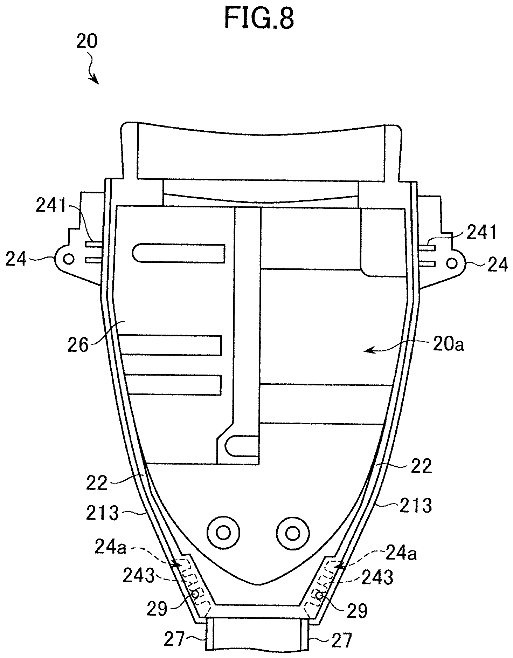

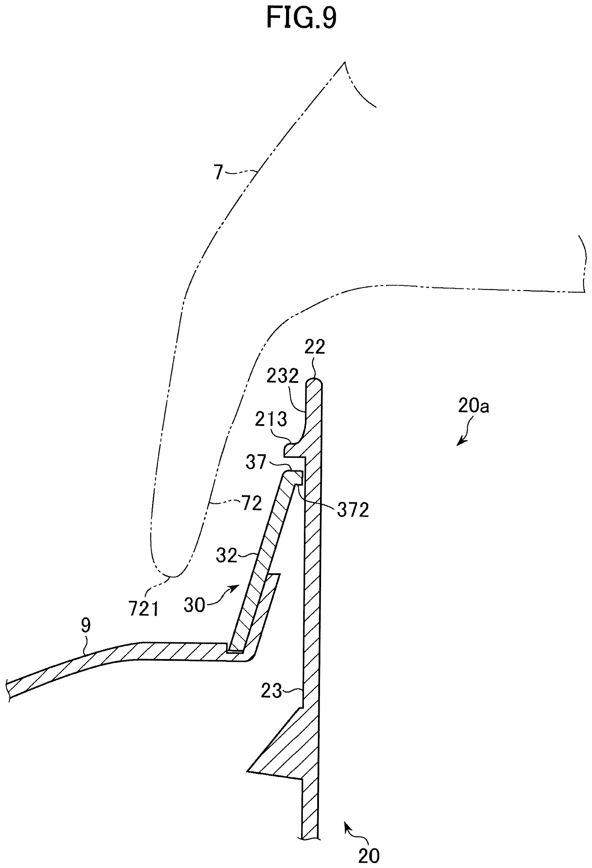

Fig. 7 is a plan view showing major elements of the two-wheeled motor vehicle 1 with the seat 7 opened. Fig. 8 is a plan view of the storage box 20. Fig. 9 is a cross sectional view of the storage box 20 and the cover 30. Note that a member identical to that described in the first embodiment is given an identical number, and will not be described in detail again here.

As shown in Figs. 7 to 9, on the outer lateral surface 23 of the storage box 20, a projection 213 is formed at a position lower than the upper edge 22, extending substantially parallel to the upper edge 22 in the range between the front end and the rear end of the outer lateral surface 23. The projection 213 is positioned higher than the lower edge 721 of the lateral part of the seat 7. With the projection 213 positioned as such, it is possible to have the outer lateral surface 23 of the storage box 20 be close to the lateral part 72 of the bottom surface of the seat 7. Therefore, it is possible to increase the capacity of the storage box 20 while reducing increase of the width of the seat 7.

Further, in a plan view, the projection 213 overlaps the upper edge 37 of the cover 30, and extends above and along the upper edge 37 of the cover 30. As the projection 213 of the storage box 20 can be seen in a plan view when the seat 7 is so positioned that the opening of the storage box 20 is left open, it is possible to have the engine unit 5 and the like placed below be hardly seen through the space between the outer lateral surface 23 of the storage box 20 and the upper edge 37 of the cover 30 and to prevent introduction of foreign matters and a hand through the space.

Further, the upper edge 37 of the cover 30 has an inner flange 372 projecting toward the outer lateral surface 23 of the storage box 20. This enables further reduction of the space between the outer lateral surface 23 of the storage box 20 and the upper edge 37 of the cover 30 (see Fig. 9) . Note that, however, the inner flange 372 is not mandatory.

Further, a dent part 24a that is dented inner-sideward is formed below the projection 29 on the outer lateral surface 23 of the storage box 20. A plurality of ribs 243 extending in the up-down direction are formed inside the dent part 24a. As the ribs 241, 243 are formed at positions lower than the projection 213 as described above, it is possible to have the ribs 241, 243 be hardly seen through the space between the outer lateral surface 23 of the storage box 20 and the upper edge 37 of the cover 30, and also to improve rigidity of the storage box 20.

Although an embodiment of the present invention has been described above, the present invention is not limited to the above described embodiment, and obviously, various modified embodiments based on the appended claims are possible for a person skilled in the art.

## Claims

1. A two-wheeled motor vehicle (1), comprising:
a vehicle body frame (40);
a storage box (20) supported by the vehicle body frame (40);
a seat (7) placed above the storage box (20), being capable of opening and closing an opening defined by an upper edge (22) of the storage box (20);
the upper edge (22) of the storage box comprising the upper edges of two spaced lateral walls of the storage box (20);
and a cover (30) placed beside the storage box (20),
wherein
a lateral part (72) of a bottom surface of the seat (7) is bent downward, and opposed to a lateral surface (23) of a first of the two spaced lateral walls of the storage box (20) so as to go farther away from the lateral surface (23) of said first lateral wall of the storage box (20) as it goes downward,
an upper edge (37) of the cover (30) is positioned, in a side view, higher than a lower edge (721) of a lateral part of the seat (7) and lower than the upper edge (22) of said first lateral wall of the storage box (20),
a clearance is formed between the lateral surface (23) of said first lateral wall of the storage box (20) and the upper edge (37) of the cover (30),
no flange that spreads outward is formed on the upper edge (22) of said lateral wall of the storage box (20)
the lateral surface (23) of said first lateral wall of the storage box (20) has a projection (213) formed thereon at a position lower than the upper edge (22) of said first lateral wall of the storage box (20), the projection (213) overlapping the upper edge (37) of the cover (30) in a plan view, in which a part (232) of the lateral surface (23) above the projection (213) is formed as a flat surface up to the upper edge (22) of the lateral wall of the storage box (20), and
the projection (213) extends above and along the upper edge (37) of the cover (30),
the two-wheeled motor vehicle being **characterized in that:**
the two spaced lateral walls of the storage box (20) form a storage space (20a) which continues to a space between the lateral part (72) of the bottom surface of the seat (7) and the lateral surface (23) of said first lateral wall of the storage box (20) through a clearance between the bottom surface of the seat (7) and the upper edge (22) of the lateral wall of the storage box (20) when the seat (7) is positioned leaving the opening of the storage box (20) close.

2. The two-wheeled motor vehicle (1) according to claim 1, wherein when the seat (7) is positioned leaving the opening of the storage box (20) open, the projection (213) is seen in a plan view.

3. The two-wheeled motor vehicle (1) according to claim 1 or 2, wherein the upper edge (37) of the cover (30) has an inside flange (372) projecting toward the lateral surface (23) of said first lateral wall of the storage box (20).

4. The two-wheeled motor vehicle (1) according to any one of claims 1 to 3, wherein the seat (7) is able to rock by means of a hinge mechanism (50) provided to a front end of the seat (7) and a front end of the storage box (20).

5. The two-wheeled motor vehicle (1) according to claim 4, wherein
the hinge mechanism (50) includes a shaft (52), a pair of hinges (78) attached to the seat (7) so as to rock relative to the shaft (52), and a pair of hinges (27) attached to the storage box (20) so as to rock relative to the shaft (52), and
the pair of hinges (78) attached to the seat (7) are positioned more outward than the pair of hinges (27) attached to the storage box (20).

6. The two-wheeled motor vehicle (1) according to any one of claims 1 to 5, wherein a rib (241, 243) extending in an up-down direction is formed on a lateral surface (23) of said first lateral wall of the storage box (20) at a position lower than the projection (213).

## Patentansprüche

1. Zweirad-Kraftfahrzeug (1), das umfasst:
einen Fahrzeug-Karosserierahmen (40);
ein Aufbewahrungsfach (20), das von dem Fahrzeug-Karosserierahmen (40) getragen wird;
einen Sitz (7), der oberhalb des Aufbewahrungsfachs (20) positioniert ist und mit dem eine Öffnung, die durch einen oberen Rand (22) des Aufbewahrungsfachs (20) gebildet wird, geöffnet und geschlossen werden kann;
den oberen Rand (22) des Aufbewahrungsfachs, der die oberen Ränder zweier beabstandeter seitlicher Wände des Aufbewahrungsfachs (20) umfasst;
und eine Abdeckung (30), die neben dem Aufbewahrungsfach (20) positioniert ist,
wobei
ein seitlicher Teil (72) einer unteren Fläche des Sitzes (7) nach unten gebogen ist und einer seitlichen Fläche (23) einer ersten der zwei beabstandeten seitlichen Wände des Aufbewahrungsfachs (20) gegenüberliegt, so dass er sich im Verlauf nach unten von der seitlichen Fläche (23) der ersten seitlichen Wand des Aufbewahrungsfachs (20) entfernt,
ein oberer Rand (37) der Abdeckung (30), in einer Seitenansicht, höher liegt als ein unterer Rand (721) eines seitlichen Teils des Sitzes (7) und tiefer als der obere Rand (22) der seitlichen Wand des Aufbewahrungsfachs (20),
ein Zwischenraum zwischen der seitlichen Fläche (23) der ersten seitlichen Wand des Aufbewahrungsfachs (20) und dem oberen Rand (37) der Abdeckung (30) ausgebildet ist,
kein Flansch, der sich nach außen erstreckt, an dem oberen Rand (22) der seitlichen Wand des Aufbewahrungsfachs (20) ausgebildet ist,
die seitliche Fläche (23) der ersten seitlichen Wand des Aufbewahrungsfachs (20) einen Vorsprung (213) aufweist, der daran an einer Position ausgebildet ist, die tiefer liegt als der obere Rand (22) der ersten seitlichen Wand des Aufbewahrungsfachs (20), wobei der Vorsprung (213) den oberen Rand (37) der Abdeckung (30), in Draufsicht, überlappt und ein Teil (232) der seitlichen Fläche (23) oberhalb des Vorsprungs (213) als eine plane Fläche bis zu dem oberen Rand (22) der seitlichen Wand des Aufbewahrungsfachs (20) ausgebildet ist, und
der Vorsprung (213) sich oberhalb des oberen Randes (37) der Abdeckung (30) und an ihm entlang erstreckt,
wobei das Zweirad-Kraftfahrzeug **dadurch gekennzeichnet ist, dass**:
die zwei beabstandeten seitlichen Wände des Aufbewahrungsfachs (20) einen Aufbewahrungsraum (20a) bilden, der sich zu einem Raum zwischen dem seitlichen Teil (72) der unteren Fläche des Sitzes (7) und der seitlichen Fläche (23) der ersten seitlichen Wand des Aufbewahrungsfachs (20) über einen Zwischenraum zwischen der unteren Fläche des Sitzes (7) und dem oberen Rand (22) der seitlichen Wand des Aufbewahrungsfachs (20) fortsetzt, wenn der Sitz (7) so positioniert ist, dass die Öffnung des Aufbewahrungsfachs (20) geschlossen ist.

2. Zweirad-Kraftfahrzeug (1) nach Anspruch 1, wobei, wenn der Sitz (7) so positioniert ist, dass die Öffnung des Aufbewahrungsfachs (20) offen ist, der Vorsprung (213) in Draufsicht zu sehen ist.

3. Zweirad-Kraftfahrzeug (1) nach Anspruch 1 oder 2, wobei der obere Rand (37) der Abdeckung (30) einen Innenseiten-Flansch (372) aufweist, der auf die seitliche Fläche (23) der ersten seitlichen Wand des Aufbewahrungsfachs (20) zu vorsteht.

4. Zweirad-Kraftfahrzeug (1) nach einem der Ansprüche 1 bis 3, wobei der Sitz (7) mit einem Scharnier-Mechanismus (50) geschwenkt werden kann, der sich an einem vorderen Ende des Sitzes (7) und einem vorderen Ende des Aufbewahrungsfachs (20) befindet.

5. Zweirad-Kraftfahrzeug (1) nach Anspruch 4, wobei
der Scharnier-Mechanismus (50) eine Welle (52), ein Paar Scharniere (78), die an dem Sitz (7) so angebracht sind, dass sie relativ zu der Welle (52) geschwenkt werden, und ein Paar Scharniere (27) enthält, die an dem Aufbewahrungsfach (20) so angebracht sind, dass sie relativ zu der Welle (52) geschwenkt werden, und
die paarigen Scharniere (78), die an dem Sitz (7) angebracht sind, weiter außen positioniert sind als die paarigen Scharniere (27), die an dem Aufbewahrungsfach (20) angebracht sind.

6. Zweirad-Kraftfahrzeug (1) nach einem der Ansprüche 1 bis 5, wobei ein Steg (241, 243), der sich in einer vertikalen Richtung erstreckt, an einer seitlichen Fläche (23) der ersten seitlichen Wand des Aufbewahrungsfachs (20) an einer Position ausgebildet ist, die tiefer liegt als der Vorsprung (213).

## Revendications

1. Véhicule à moteur à deux roues (1), comprenant :
une carrosserie de véhicule (40) ;
une boîte de rangement (20) supportée par la carrosserie de véhicule (40) ;
un siège (7) disposé au-dessus de la boîte de rangement (20) et pouvant ouvrir et fermer une ouverture définie par un bord supérieur (22) de la boîte de rangement (20) ;
le bord supérieur (22) de la boîte de rangement comprenant les bords supérieurs de deux parois de la boîte de rangement (20) espacées latéralement ;
et un capot (30) disposé sur le côté de la boîte de rangement (20),
dans lequel
une partie latérale (72) d'une surface inférieure du siège (7) est courbée vers le bas et fait face à une surface latérale (23) d'une première des deux parois espacées latéralement de la boîte de rangement (20), de façon à s'écarter de la surface latérale (23) de ladite première paroi latérale de la boîte de rangement (20) à mesure qu'elle descend,
un bord supérieur (37) du capot (30) est positionné, vu de côté, plus haut qu'un bord inférieur (721) d'une partie latérale du siège (7) et plus bas que le bord supérieur (22) de ladite première paroi latérale de la boîte de rangement (20),
un espacement est ménagé entre la surface latérale (23) de ladite première paroi latérale de la boîte de rangement (20) et le bord supérieur (37) du capot (30),
le bord supérieur (22) de ladite paroi latérale de la boîte de rangement (20) est dépourvu de bride s'étendant vers l'extérieur,
la surface latérale (23) de ladite première paroi latérale de la boîte de rangement (20) présente une saillie (213) formée sur elle à une position plus basse que le bord supérieur (22) de ladite première paroi latérale de la boîte de rangement (20), la saillie (213) chevauchant le bord supérieur (37) du capot (30), en vue en plan, dans lequel une partie (232) de la surface latérale (23) au-dessus de la saillie (213) est réalisée en tant que surface plate jusqu'au bord supérieur (22) de la paroi latérale de la boîte de rangement (20), et
la saillie (213) s'étend au-dessus et le long du bord supérieur (37) du capot (30),
le véhicule à moteur à deux roues étant **caractérisé en ce que** :
les deux parois latérales espacées de la boîte de rangement (20) forment un espace de rangement (20a) qui se poursuit vers un espace situé entre la partie latérale (72) de la surface inférieure du siège (7) et la surface latérale (23) de ladite première paroi latérale de la boîte de rangement (20) par l'intermédiaire d'un espacement entre la surface inférieure du siège (7) et le bord supérieur (22) de la paroi latérale de la boîte de rangement (20) lorsque le siège (7) est dans une position qui laisse fermée l'ouverture de la boîte de rangement (20).

2. Véhicule à moteur à deux roues (1) selon la revendication 1, dans lequel, lorsque le siège (7) est dans une position qui laisse ouverte l'ouverture de la boîte de rangement (20), la saillie (213) se voit, en vue en plan.

3. Véhicule à moteur à deux roues (1) selon la revendication 1 ou 2, dans lequel le bord supérieur (37) du capot (30) comporte une bride intérieure (372) avançant en direction de la surface latérale (23) de ladite première paroi latérale de la boîte de rangement (20).

4. Véhicule à moteur à deux roues (1) selon l'une quelconque des revendications 1 à 3, dans lequel le siège (7) peut basculer au moyen d'un mécanisme à charnières (50) située au niveau d'une extrémité antérieure du siège (7) et d'une extrémité antérieure de la boîte de rangement (20).

5. Véhicule à moteur à deux roues (1) selon la revendication 4, dans lequel le mécanisme à charnières (50) inclut un arbre (52), une paire de charnières (78) fixées au siège (7) de manière à basculer par rapport à l'arbre (52) et une paire de charnières (27) fixées à la boîte de rangement (20) de manière à basculer par rapport à l'arbre (52), et
les deux charnières (78) fixées au siège (7) sont situées plus à l'extérieur que les deux charnières (27) fixées à la boîte de rangement (20).

6. Véhicule à moteur à deux roues (1) selon l'une quelconque des revendications 1 à 5, dans lequel une nervure (241, 243) s'étendant dans une direction de haut en bas est formée sur une surface latérale (23) de ladite première paroi latérale de la boîte de rangement (20) à une position plus basse que la saillie (213).
